# EUROPEAN PATENT APPLICATION

(11) **EP 4 336 871 A1**
(43) Date of publication of application: **13.03.2024**
(21) Application number: 21941063.6
(22) Date of filing: 08.05.2021
(51) Int. Cl.: H04W 4/46, H04W 72/02

(54) **AUXILIARY REQUEST SENDING METHOD AND APPARATUS, AND AUXILIARY REQUEST RECEIVING METHOD AND APPARATUS**

(71) Applicant: Beijing Xiaomi Mobile Software Co., Ltd., Beijing 100085 (CN)
(72) Inventor: ZHAO, Wensu, Beijing 100085 (CN)
(74) Representative: Frommberger, Moritz
(86) International application number: PCT/CN2021/092421
(87) International publication number: WO 2022/236482

(57) **Abstract**

Provided in the embodiments of the present disclosure are an auxiliary request sending method and apparatus, and an auxiliary request receiving method and apparatus, which belong to the technical field of communications. The auxiliary request sending method is applied to a first terminal device, and the method comprises: determining a triggering condition of an auxiliary request; and according to the triggering condition of the auxiliary request, triggering a first terminal device to send the auxiliary request to a second terminal device. Thus, when a triggering condition of an auxiliary request is satisfied, a first terminal device sends the auxiliary request to a second terminal device without frequently sending the auxiliary request, thereby reducing signaling overheads.

## Description

### TECHNICAL FIELD

The present disclosure relates to a field of communication technologies, and particularly to a method and an apparatus for sending a coordination request, and a method and an apparatus for receiving a coordination request.

### BACKGROUND

In the related art, there is an important branch in the cellular IoT technology called Device to Device Communication, officially named as Sidelink in the protocol. In a coordination resource selection mechanism of the Sidelink, two terminal devices UE-A and UE-B are provided. The UE-A is a coordination UE (User Equipment) for the UE-B, and the UE-B is a UE that performs resource selection for its own data transmission. The UE-B will send a coordination request to the UE-A. The UE-A determines a resource set and returns it to the UE-B in coordination information. When the UE-B performs resource selection for data transmission, it may consider the resource set provided by the UE-A.

In the above-mentioned coordination resource selection mechanism, conditions for sending the coordination request by the UE-B are not provided, so the UE-B frequently sends the coordination request, resulting in high signaling overhead.

### SUMMARY

Embodiments of a first aspect of the present disclosure propose a method for sending a coordination request. The method is applied to a first terminal device and includes: determining a trigger condition of the coordination request; and triggering the first terminal device to send the coordination request to a second terminal device according to the trigger condition of the coordination request.

In this technical solution, after the first terminal device determines the trigger condition of the coordination request, the first terminal device is triggered to send the coordination request to the second terminal device according to the trigger condition of the coordination request. Therefore, when the trigger condition of the coordination request is satisfied, the first terminal device sends the coordination request to the second terminal device, and the first terminal device does not need to send the coordination request frequently, reducing signaling overhead.

Optionally, triggering the first terminal device to send the coordination request to the second terminal device includes: in response to the trigger condition being that a number of received continuous HARQ NACK feedbacks is greater than a configured number threshold, triggering the first terminal device to send the coordination request to the second terminal device.

Optionally, triggering the first terminal device to send the coordination request to the second terminal device includes: in response to the trigger condition being that a packet delay budget PDB of a data packet to be sent is greater than a configured PDB threshold, triggering the first terminal device to send the coordination request to the second terminal device.

Optionally, triggering the first terminal device to send the coordination request to the second terminal device includes: in response to the trigger condition being that a channel occupancy ratio CR of a data packet to be sent is less than or equal to a pre-configured CR threshold, triggering the first terminal device to send the coordination request to the second terminal device.

Optionally, the CR is a ratio of a number of first subchannels within a specified slot range to a total number of subchannels belonging to a resource pool within the specified slot range. The first subchannels are a sum of a number of subchannels used to send the data packet within the specified slot range and reserved subchannels to be used to send the data packet. The CR threshold is a CR limit value corresponding to a configured priority k, and the CR threshold is pre-configured by an RRC message.

Optionally, triggering the first terminal device to send the coordination request to the second terminal device includes: in response to the trigger condition being that a measured channel busy ratio CBR is less than or equal to a pre-configured CBR threshold, triggering the first terminal device to send the coordination request to the second terminal device.

Optionally, the CBR is a ratio of a number of second subchannels within a specified slot range to a total number of subchannels in a resource pool, and the CBR threshold is pre-configured by an RRC message. A second subchannel is a subchannel with a corresponding received signal strength indicator RSSI greater than a configured RSSI threshold.

Optionally, triggering the first terminal device to send the coordination request to the second terminal device includes: in response to the trigger condition being an arrival of a data packet to be sent, triggering the first terminal device to send the coordination request to the second terminal device.

Optionally, triggering the first terminal device to send the coordination request to the second terminal device includes: in response to the trigger condition being an arrival of a first data packet to be sent, triggering the first terminal device to send a coordination request carrying a periodic feedback flag to the second terminal device. The periodic feedback flag is configured to indicate the second terminal device to periodically send coordination information.

Optionally, triggering the first terminal device to send the coordination request to the second terminal device includes: in response to the trigger condition being that a priority of a data packet to be sent is less than or equal to a configured priority threshold, triggering the first terminal device to send the coordination request to the second terminal device, in which the priority threshold is pre-configured by an RRC message.

Embodiments of a second aspect of the present disclosure propose a method for receiving a coordination request. The method is applied to a second terminal device and includes: receiving a coordination request sent by a first terminal device, in which the coordination request is initiated by the first terminal device based on a trigger condition.

Optionally, the coordination request is a coordination request sent by the first terminal device in response to the trigger condition being that a number of received continuous HARQ NACK feedbacks is greater than a configured number threshold.

Optionally, the coordination request is a coordination request sent by the first terminal device in response to the trigger condition being that a packet delay budget PDB of a data packet to be sent is greater than a configured PDB threshold.

Optionally, the coordination request is a coordination request sent by the first terminal device in response to the trigger condition being that a channel occupancy ratio CR of a data packet to be sent is less than or equal to a pre-configured CR threshold.

Optionally, the CR is a ratio of a number of first subchannels within a specified slot range to a total number of subchannels belonging to a resource pool within the specified slot range. The first subchannels are a sum of a number of subchannels used to send the data packet within the specified slot range and reserved subchannels to be used to send the data packet. The CR threshold is a CR limit value corresponding to a configured priority k, and the CR threshold is pre-configured by an RRC message.

Optionally, the coordination request is a coordination request sent by the first terminal device in response to the trigger condition being that a measured channel busy ratio CBR is less than or equal to a pre-configured CBR threshold.

Optionally, the CBR is a ratio of a number of second sub-channels within a specified slot range to a total number of sub-channels in a resource pool, and the CBR threshold is pre-configured by an RRC message. A second subchannel is a subchannel with a corresponding received signal strength indicator RSSI greater than a configured RSSI threshold.

Optionally, the coordination request is a coordination request sent by the first terminal device in response to the trigger condition being an arrival of a data packet to be sent.

Optionally, the coordination request is a coordination request carrying a periodic feedback flag sent by the first terminal device in response to the trigger condition being an arrival of a first data packet to be sent. The periodic feedback flag is configured to indicate the second terminal device to periodically send coordination information.

Optionally, the coordination request is a coordination request sent by the first terminal device in response to the trigger condition being that a priority of a data packet to be sent is less than or equal to a configured priority threshold, in which the priority threshold is pre-configured by an RRC message.

Embodiments of a third aspect of the present disclosure propose an apparatus for sending a coordination request. The apparatus is applied to a first terminal device and includes a processing unit. The processing unit is configured to determine a trigger condition of a coordination request; and further configured to trigger the first terminal device to send the coordination request to a second terminal device according to the trigger condition of the coordination request.

Optionally, the processing unit is specifically configured to, in response to the trigger condition being that a number of received continuous HARQ NACK feedbacks is greater than a configured number threshold, trigger the first terminal device to send the coordination request to the second terminal device.

Optionally, the processing unit is specifically configured to, in response to the trigger condition being that a packet delay budget PDB of a data packet to be sent is greater than a configured PDB threshold, trigger the first terminal device to send the coordination request to the second terminal device.

Optionally, the processing unit is specifically configured to, in response to the trigger condition being that a channel occupancy ratio CR of a data packet to be sent is less than or equal to a pre-configured CR threshold, trigger the first terminal device to send the coordination request to the second terminal device.

Optionally, the CR is a ratio of a number of first subchannels within a specified slot range to a total number of subchannels belonging to a resource pool within the specified slot range. The first subchannels are a sum of a number of subchannels used to send the data packet within the specified slot range and reserved subchannels to be used to send the data packet. The CR threshold is a CR limit value corresponding to a configured priority k, and the CR threshold is pre-configured by an RRC message.

Optionally, the processing unit is specifically configured to, in response to the trigger condition being that a measured channel busy ratio CBR is less than or equal to a pre-configured CBR threshold, trigger the first terminal device to send the coordination request to the second terminal device.

Optionally, the CBR is a ratio of a number of second subchannels within a specified slot range to a total number of subchannels in a resource pool, and the CBR threshold is pre-configured by an RRC message. A second subchannel is a subchannel with a corresponding received signal strength indicator RSSI greater than a configured RSSI threshold.

Optionally, the processing unit is specifically configured to, in response to the trigger condition being an arrival of a data packet to be sent, trigger the first terminal device to send the coordination request to the second terminal device.

Optionally, the processing unit is specifically configured to, in response to the trigger condition being an arrival of a first data packet to be sent, trigger the first terminal device to send a coordination request carrying a periodic feedback flag to the second terminal device. The periodic feedback flag is configured to indicate the second terminal device to periodically send coordination information.

Optionally, the processing unit is specifically configured to, in response to the trigger condition being that a priority of a data packet to be sent is less than or equal to a configured priority threshold, trigger the first terminal device to send the coordination request to the second terminal device, in which the priority threshold is pre-configured by an RRC message.

Embodiments of a fourth aspect of the present disclosure propose an apparatus for receiving a coordination request. The apparatus is applied to a second terminal device, and includes: a transceiver unit, configured to receive a coordination request sent by a first terminal device. The coordination request is initiated by the first terminal device based on a trigger condition.

Optionally, the coordination request is a coordination request sent by the first terminal device in response to the trigger condition being that a number of received continuous HARQ NACK feedbacks is greater than a configured number threshold.

Optionally, the coordination request is a coordination request sent by the first terminal device in response to the trigger condition being that a packet delay budget PDB of a data packet to be sent is greater than a configured PDB threshold.

Optionally, the coordination request is a coordination request sent by the first terminal device in response to the trigger condition being that a channel occupancy ratio CR of a data packet to be sent is less than or equal to a pre-configured CR threshold.

Optionally, the CR is a ratio of a number of first subchannels within a specified slot range to a total number of subchannels belonging to a resource pool within the specified slot range. The first subchannels are a sum of a number of subchannels used to send the data packet within the specified slot range and reserved subchannels to be used to send the data packet. The CR threshold is a CR limit value corresponding to a configured priority k, and the CR threshold is pre-configured by an RRC message.

Optionally, the coordination request is a coordination request sent by the first terminal device in response to the trigger condition being that a measured channel busy ratio CBR is less than or equal to a pre-configured CBR threshold.

Optionally, the CBR is a ratio of a number of second sub-channels within a specified slot range to a total number of sub-channels in a resource pool, and the CBR threshold is pre-configured by an RRC message. A second subchannel is a subchannel with a corresponding received signal strength indicator RSSI greater than a configured RSSI threshold.

Optionally, the coordination request is a coordination request sent by the first terminal device in response to the trigger condition being an arrival of a data packet to be sent.

Optionally, the coordination request is a coordination request carrying a periodic feedback flag sent by the first terminal device in response to the trigger condition being an arrival of a first data packet to be sent. The periodic feedback flag is configured to indicate the second terminal device to periodically send coordination information.

Optionally, the coordination request is a coordination request sent by the first terminal device in response to the trigger condition being that a priority of a data packet to be sent is less than or equal to a configured priority threshold, in which the priority threshold is pre-configured by an RRC message.

Embodiment of a fifth aspect of the present disclosure propose an apparatus for sending a coordination request. The apparatus includes a processor and a memory. The memory is stored with a computer program, and the processor executes the computer program stored in the memory, to cause the apparatus to perform the method described in the embodiments of the first aspect of the present disclosure.

Embodiments of a sixth aspect of the present disclosure propose an apparatus for receiving a coordination request. The apparatus includes a processor and a memory. The memory is stored with a computer program, and the processor executes the computer program stored in the memory to cause the apparatus to perform the method described in the embodiments of the second aspect of the present disclosure.

Embodiments of a seventh aspect of the present disclosure propose an apparatus for sending a coordination request. The apparatus includes a processor and an interface circuit. The interface circuit is configured to receive code instructions and transmit them to the processor. The processor is configured to run the code instructions to perform the method described in the embodiments of the first aspect of the present disclosure.

Embodiments of an eighth aspect of the present disclosure propose an apparatus for receiving a coordination request. The apparatus includes a processor and an interface circuit. The interface circuit is configured to receive code instructions and transmit them to the processor. The processor is configured to run the code instructions to perform the method described in the embodiments of the second aspect of the present disclosure.

Embodiments of a ninth aspect of the present disclosure propose a computer-readable storage medium configured to store instructions. When the instructions are executed, the method described in the embodiments of the first aspect of the present disclosure is caused to be implemented.

Embodiments of a tenth aspect of the present disclosure propose a computer-readable storage medium configured to store instructions. When the instructions are executed, the method described in the embodiments of the second aspect of the present disclosure is caused to be implemented.

Embodiments of an eleventh aspect of the present disclosure propose a computer program product, which, when running on a computer, causes the computer to execute the method described in the embodiments of the first aspect of the present disclosure.

Embodiments of a twelfth aspect of the present disclosure propose a computer program product, which, when running on a computer, causes the computer to execute the method described in the embodiments of the second aspect of the present disclosure.

Additional aspects and advantages of the present disclosure in part will be set forth in the following description, and in part will be obvious from the following description, or will be learned by practice of the disclosure.

### BRIEF DESCRIPTION OF THE DRAWINGS

In order to more clearly illustrate the technical solutions in embodiments of the present disclosure or the background art, the following will describe the drawings that need to be used in the embodiments of the present disclosure or the background art.
FIG. 1 is a schematic flowchart of a method for sending a coordination request provided by embodiments of the present disclosure.
FIG. 2 is a schematic diagram of sending a coordination request from a UE-B to a UE-A provided by embodiments of the present disclosure.
FIG. 3 is a schematic flowchart of another method for sending a coordination request provided by embodiments of the present disclosure.
FIG. 4 is a schematic flowchart of another method for sending a coordination request provided by embodiments of the present disclosure.
FIG. 5 is a schematic flowchart of another method for sending a coordination request provided by embodiments of the present disclosure.
FIG. 6 is a schematic flowchart of another method for sending a coordination request provided by embodiments of the present disclosure.
FIG. 7 is a schematic flowchart of another method for sending a coordination request provided by embodiments of the present disclosure.
FIG. 8 is a schematic diagram of sending a coordination request from a UE-B to a UE-A provided by embodiments of the present disclosure.
FIG. 9 is a schematic flowchart of another method for sending a coordination request according to embodiments of the present disclosure.
FIG. 10 is a schematic flowchart of another method for sending a coordination request provided by embodiments of the present disclosure.
FIG. 11 is a schematic flowchart of a method for receiving a coordination request provided by embodiments of the present disclosure.
FIG. 12 is a schematic flowchart of another method for receiving a coordination request provided by embodiments of the present disclosure.
FIG. 13 is a schematic flowchart of another method for receiving a coordination request provided by embodiments of the present disclosure.
FIG. 14 is a schematic flowchart of another method for receiving a coordination request provided by embodiments of the present disclosure.
FIG. 15 is a schematic flowchart of another method for receiving a coordination request provided by embodiments of the present disclosure.
FIG. 16 is a schematic flowchart of another method for receiving a coordination request provided by embodiments of the present disclosure.
FIG. 17 is a schematic flowchart of another method for receiving a coordination request provided by embodiments of the present disclosure.
FIG. 18 is a schematic flowchart of another method for receiving a coordination request provided by embodiments of the present disclosure.
FIG. 19 is a schematic structural diagram of an apparatus for sending a coordination request provided by embodiments of the present disclosure.
FIG. 20 is a schematic structural diagram of an apparatus for receiving a coordination request provided by embodiments of the present disclosure.
Fig. 21 is a block diagram of a UE 2100 provided by embodiments of the present disclosure.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. Implementations described in the following exemplary embodiments do not represent all implementations consistent with the embodiments of the present disclosure. Rather, they are merely examples of apparatuses and methods consistent with aspects of the embodiments of the present disclosure and as recited in the appended claims.

Terms used in the embodiments of the present disclosure are for the purpose of describing specific embodiments only, and are not intended to limit the embodiments of the present disclosure. As used in the examples of the present disclosure and the appended claims, the singular forms "a" and "the" are also intended to include the plural unless the context clearly dictates otherwise. It should also be understood that the term "and/or" as used herein refers to and includes any and all possible combinations of one or more of the associated listed items.

It should be understood that although the embodiments of the present disclosure may use the terms first, second, third, etc. to describe various information, the information should not be limited to these terms. These terms are only used to distinguish information of the same type from one another. For example, without departing from the scope of the embodiments of the present disclosure, first information may also be called second information, and similarly, second information may also be called first information. Depending on the context, the words "if' and "in a case that" as used herein may be interpreted as "when" or "while" or "in response to determining".

Embodiments of the present disclosure are described in detail below, examples of which are illustrated in the accompanying drawings, where like or similar reference numerals designate like or similar elements throughout. The embodiments described below by referring to the figures are exemplary and are intended to explain the present disclosure and should not be construed as limiting the present disclosure.

Before describing the embodiments of the present disclosure, in order to facilitate understanding, commonly used technical terms of the present disclosure are firstly introduced:
HARQ refers to a Hybrid Automatic Repeat Request.
NACK refers to a Negative Acknowledgment.
PDB refers to a Packet Delay Budget.
CR refers to a Channel Occupancy Ratio.
CBR refers to a Channel Busy Ratio.
RSSI refers to a Received Signal Strength Indicator.
RRC refers to a Radio Resource Control.

Since LTE (Long Term Evolution), 3GPP (3rd Generation Partnership Project) has been developing the Sidelink standard as a UE-to-UE direct communication standard. A first standard of NR Sidelink has been completed in Rel-16, in which a solution of NR Sidelink is mainly used for vehicle networking communication V2X (Vehicle to Everything) and public safety. For the V2X and public safety, due to time constraints, Release16 does not fully support service requirements and operational scenarios. SA (Service and System Aspects) has made some enhancements in Release17 NR Sidelink, such as architecture enhancements and system enhancements for supporting advanced V2X services for 3GPP. Also, in a SA working group, other commercial use cases related to NR Sidelink are being studied, such as network-controlled interactive services, enhanced energy-efficiency relays, wide coverage, audio-visual service production. Therefore, in an establishment of the project in Rel-17, it is necessary to further enhance the reliability of Sidelink transmission and reduce the delay.

In the related art, in order to further enhance the reliability of Sidelink transmission and reduce the delay, two terminal devices UE-A and UE-B are provided in the NR Sidelink coordination resource selection mechanism. The UE-A is a coordination UE for the UE-B, and the UE-B is a UE that performs resource selection for its own data transmission. The UE-B will send a coordination request to the UE-A. The UE-A determines a resource set and returns it to the UE-B in coordination information. When the UE-B performs resource selection for data transmission, it may consider the resource set provided by the UE-A.

However, in the above-mentioned coordination resource selection mechanism, conditions for sending the coordination request by UE-B are not provided, so the UE-B frequently sends the coordination request, and the signaling overhead is large.

In view of the above problems, the present disclosure provides a method for sending a coordination request, a method for receiving a coordination request, and an apparatus thereof.

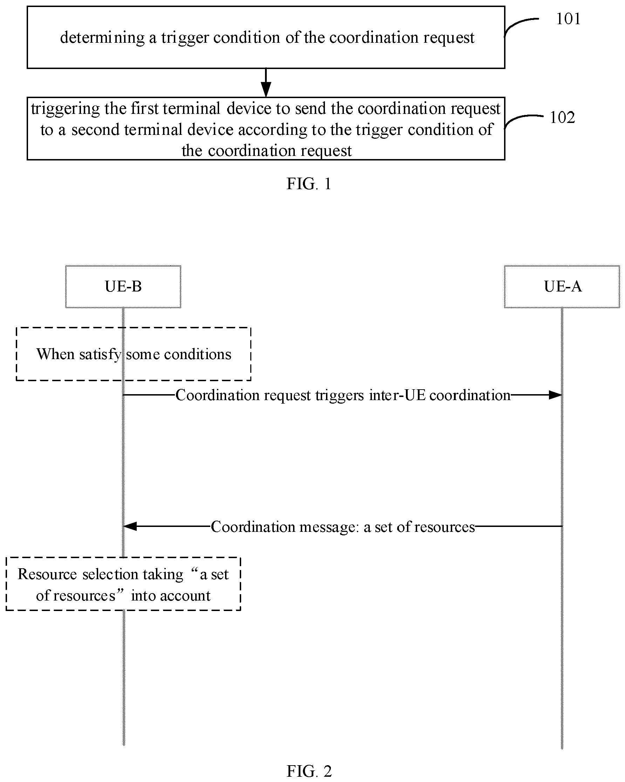

Fig. 1 is a schematic flowchart of a method for sending a coordination request provided by embodiments of the present disclosure. It should be noted that the method for sending a coordination request in the embodiments of the present disclosure is applied to a first terminal device. The first terminal device may be a terminal device that sends a coordination request, for example, the first terminal device may be a UE-B.

As shown in Figure 1, the method for sending the coordination request may include the following steps.

In step 101, a trigger condition of the coordination request is determined.

In the embodiments of the present disclosure, the first terminal device may preset the trigger condition of the coordination request. The trigger condition of the coordination request may be used to trigger the first terminal device to send the coordination request, and the number of trigger conditions of the coordination request may be one or more.

In step 102, the first terminal device is triggered to send the coordination request to a second terminal device according to the trigger condition of the coordination request.

In the embodiment of the present disclosure, the first terminal device may trigger the first terminal device to send the coordination request to the second terminal device according to a preset trigger condition of the coordination request. There are many ways to pre-set, for example, pre-storing in the first terminal device, determining by the first terminal device according to a relevant communication protocol, or sending to the first terminal device by the network side device or other devices.

That is to say, in order to reduce signaling overhead, as shown in FIG. 2, when the first terminal device performs resource selection for sending a data packet, it is determined whether the trigger condition of the coordination request is satisfied, and when the trigger condition of the coordination request is satisfied, the first terminal device is triggered to send the coordination request to the second terminal device. After receiving the coordination request from the first terminal device, the second terminal device may send coordination information to the first terminal device, and the first terminal device may refer to the coordination information to perform resource selection.

As an example, in a case that the number of trigger conditions of the coordination request is one, if the trigger condition of the coordination request is satisfied when the first terminal device performs resource selection for sending a data packet, the first terminal device is triggered to send the coordination request to the second terminal device. If the trigger condition of the coordination request is not satisfied when the first terminal device performs resource selection for sending a data packet, the first terminal device does not send the coordination request to the second terminal device.

As another example, in a case that there are multiple trigger conditions of the coordination request, if one or more of the trigger conditions of the coordination request are satisfied when the first terminal device performs resource selection for sending a data packet, the first terminal device is triggered to send the coordination request to the second terminal device. If any trigger condition of the coordination request of the multiple trigger conditions of the coordination request is not satisfied when the first terminal device performs resource selection for sending a data packet, the first terminal device does not send the coordination request to the second terminal device.

It should be noted that the second terminal device may be a terminal device that receives the coordination request sent by the first terminal device, and the second terminal device may be a coordination terminal device for the first terminal device. For example, the second terminal device may be a UE-A, the first terminal device may be a UE-B, and the UE-A may be a coordination UE for the UE-B.

In the method for sending a coordination request according to the embodiments of the present disclosure, after determining the trigger condition of the coordination request, the first terminal device is triggered to send the coordination request to the second terminal device according to the trigger condition of the coordination request. Therefore, when the trigger condition of the coordination request is satisfied, the first terminal device sends the coordination request to the second terminal device, and the coordination request does not need to be sent frequently, thereby reducing signaling overhead.

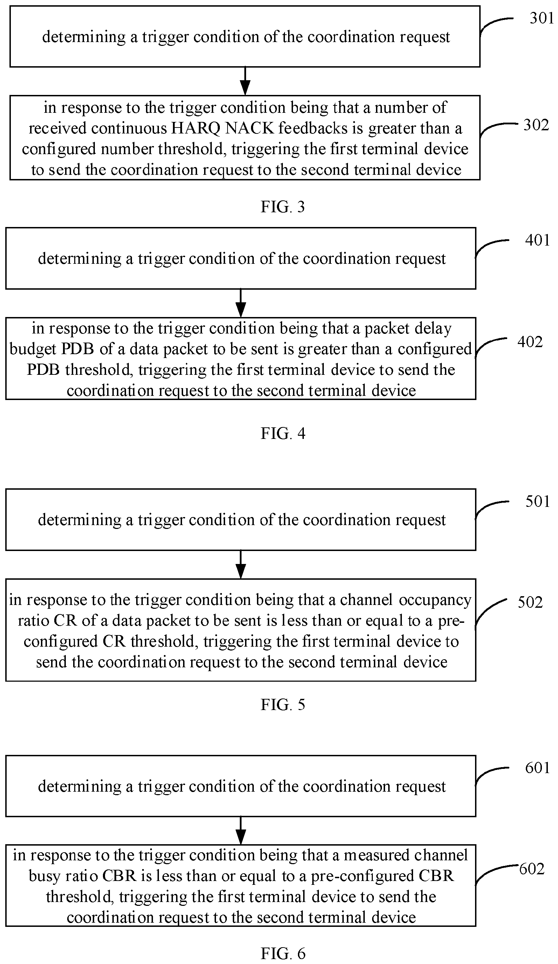

Embodiments of the present disclosure provide another method for sending a coordination request, and FIG. 3 is a schematic flowchart of another method for sending a coordination request provided by embodiments of the present disclosure. The method for sending the coordination request can be applied to the first terminal device. The method for sending the coordination request may be executed alone, or may be executed in combination with any embodiments in the present disclosure or possible implementation manners in the embodiments, or may be executed in combination with any technical solution in related technologies.

As shown in Figure 3, the method for sending the coordination request may include the following steps.

In step 301, a trigger condition of the coordination request is determined.

In step 302, in response to the trigger condition being that the number of received continuous HARQ NACK feedbacks is greater than a configured threshold, the first terminal device is triggered to send the coordination request to the second terminal device.

In the embodiments of the present disclosure, the first terminal device may preset the trigger condition to be that the number of received continuous HARQ NACK feedbacks is greater than the configured number threshold, the first terminal device performs resource selection for sending a data packet, and when the number of received continuous HARQ NACK feedbacks is greater than the configured number threshold, the first terminal device itself is triggered to send the coordination request to the second terminal device. For example, the first terminal device receives N times of HARQ NACK feedback continuously, and the configured number threshold is Nₘₐₓ. When N>Nₘₐₓ, it triggers itself to send the coordination request to the second terminal device.

That is to say, when the UE-B receives N times of HARQ NACK feedback continuously, and N>Nₘₐₓ, where Nₘₐₓ is the number threshold, it means that there is a conflict between the resources selected by the UE-B when sending the data packet and the resources reserved by other UEs. If the UE-B uses resources in its own candidate resource set, there may be serious hidden nodes and half-duplex problems, resulting in low reliability of data transmission of the UE-B, then the UE-B sends the coordination request to the UE-A to obtain coordination from the UE-A to provide a more reliable resource set.

In the embodiments of the present disclosure, step 301 may be implemented in any of the embodiments of the present disclosure, which is not limited in the embodiments of the present disclosure, and will not be repeated here. Similar to other embodiments of the present disclosure, there may be many ways of presetting, such as pre-storing in the first terminal device, or determining by the first terminal device according to a relevant communication protocol, or sending by the network side device or other devices to the first terminal device.

In the method for sending the coordination request in the embodiments of the present disclosure, by determining the trigger condition of the coordination request, and in response to the trigger condition being that the number of received continuous HARQ NACK feedbacks is greater than the configured number threshold, the first terminal device is triggered to send the second terminal device to send the coordination request. Thereby the first terminal device sends the coordination request to the second terminal device when the number of received continuous HARQ NACK feedbacks is greater than the configured number threshold, and does not need to send coordination requests frequently, reducing signaling overhead.

Embodiments of the present disclosure provide another method for sending a coordination request, and FIG. 4 is a schematic flowchart of another method for sending a coordination request provided by the embodiments of the present disclosure. The method for sending the coordination request is applicable to the first terminal device. The method for sending the coordination request may be executed alone, or may be executed in combination with any embodiment in the present disclosure or a possible implementation manner in the embodiments, or may be executed in combination with any technical solution in related technologies.

As shown in Figure 4, the method for sending the coordination request may include the following steps.

In step 401, a trigger condition of the coordination request is determined.

In step 402, in response to the trigger condition being that a packet delay budget PDB of a data packet to be sent is greater than a configured PDB threshold, the first terminal device is triggered to send the coordination request to the second terminal device.

In the embodiments of the present disclosure, the first terminal device can preset the trigger condition that the packet delay budget PDB of the data packet to be sent is greater than the configured PDB threshold, and the first terminal device performs resource selection for sending the data packet to be sent, when the packet delay budget PDB is greater than the configured PDB threshold, it triggers itself to send a coordination request to the second terminal device. For example, the PDB threshold is PDB_{threshold}, and the packet delay budget PDB of the data packet to be sent of the first terminal device satisfies PDB>PDB_{threshold}, the first terminal device triggers itself to send the coordination request to the second terminal device.

As a possible implementation of the embodiments of the present disclosure, when the UE-B performs resource selection in a slot n for the data packet sent by itself, for example, the time window corresponding to resource selection is [n+T₁, n+T_{2]}, where T₁<T₂, T₂≤PDB. When the PDB value is larger, it means that the UE-B has lower requirements on delay for sending the data packet. Since in the process of coordinating UE-B in the resource selection by the UE-A, signaling interaction is required between the UE-A and UE-B, and the signaling interaction requires a certain delay. Therefore, when sending the data packet by the UE-B requires a relatively long delay, the coordination request can be sent to the UE-A. Therefore, when the value of the PDB is greater than the PDB threshold, the UE-B can be triggered to send the coordination request to the UE-A.

In the embodiments of the present disclosure, step 401 may be implemented in any of the embodiments of the present disclosure, which is not limited in the embodiments of the present disclosure, and will not be repeated here. Similar to other embodiments of the present disclosure, there can be many ways of presetting, such as pre-stored in the first terminal device, or determined by the first terminal device according to a relevant communication protocol, or sending by a network side device or other devices to the first terminal device.

In the method for sending the coordination request in the embodiments of the present disclosure, by determining the trigger condition of the coordination request, and in response to the trigger condition being that the packet delay budget PDB of the data packet to be sent is greater than the configured PDB threshold, the first terminal device is triggered to send the coordination request to the second terminal device. Therefore, when the packet delay budget PDB of the data packet to be sent is satisfied to be greater than the configured PDB threshold, the first terminal device sends the coordination request to the second terminal device, and the coordination request does not need to be sent frequently, reducing signaling overhead.

Embodiments of the present disclosure provides another method for sending a coordination request, and FIG. 5 is a schematic flowchart of another method for sending a coordination request provided by the embodiments of the present disclosure. The method for sending the coordination request can be applied to the first terminal device. The method for sending the coordination request may be executed alone, or may be executed in combination with any embodiment in the present disclosure or a possible implementation manner in the embodiments, or may be executed in combination with any technical solution in related technologies.

As shown in Figure 5, the method for sending the coordination request may include the following steps.

In step 501, a trigger condition of the coordination request is determined.

In step 502, in response to the trigger condition being that the channel occupancy ratio CR of the data packet to be sent is less than or equal to a pre-configured CR threshold, the first terminal device is triggered to send the coordination request to the second terminal device.

In the embodiments of the present disclosure, the first terminal device may preset the trigger condition that the channel occupancy ratio CR of the data packet to be sent is less than or equal to the pre-configured CR threshold, and the first terminal device performs resource selection for sending the data packet to be sent, when the channel occupancy ratio CR of the data packet to be sent is less than or equal to the pre-configured CR threshold, the first terminal device triggers itself to send the coordination request to the second terminal device. The CR is a ratio of a number of first subchannels within a specified slot range to a total number of subchannels belonging to a resource pool within the specified slot range. The first subchannels are a sum of a number of subchannels used to send the data packet within the specified slot range and reserved subchannels to be used to send the data packet. The CR threshold is a CR limit value corresponding to a configured priority k, and the CR threshold is pre-configured by an RRC message. For example, the CR threshold is CR_{Limit}(k), the channel occupancy ratio CR of the data packet to be sent is Σ_{i≥k}CR(i), when Σ_{i≥k}CR(i) ≤ CR_{Limit}(k), the first terminal device is triggered to send the coordination request to the second terminal device, where i and k are priorities. Similar to other embodiments of the present disclosure, there can be many ways of presetting, such as pre-storing in the first terminal device, or determining by the first terminal device according to a relevant communication protocol, or sending by the network side device or other devices to the first terminal device.

As a possible implementation of the embodiments of the present disclosure, a method for measuring CR in R16 can be reused, that is, measuring a proportion of a number of subchannels used by the UE-B to send the data packet within the range of [n-a, n+1] and a number of sub-channels included in a Sidelink authorization (referring to a number of reserved sub-channels to be used to send data packets) within the range of [n, n+b] to a total number of sub-channels belonging to a resource pool within the range of [n-a, n+b], where values of a and b are set by the UE-B, and the slot n refers to a slot in which UE-B sends data packets. In addition, CR_{Limit}(k) is a CR limit value measured in the Sidelink transmission and corresponding to a configured priority k. The priority k can be pre-configured, and Σ_{i≥k}CR(i) ≤ CR_{Limit}(k) means that the sum of the CRs corresponding to the direct link transmission of the priority value not lower than the priority k is less than or equal to the CR limit value corresponding to the priority k. When the UE-B performs resource selection for sending the data packet, and Σ_{i≥k}CR(i) ≤ CR_{Limit}(k) is satisfied, it sends the coordination request to the UE-A.

In the embodiments of the present disclosure, step 501 may be implemented in any of the embodiments of the present disclosure, which is not limited in the embodiments of the present disclosure, and will not be repeated here.

In the method for sending the coordination request in the embodiments of the present disclosure, by determining the trigger condition of the coordination request, and in response to the trigger condition being that the channel occupancy ratio CR of the data packet to be sent is less than or equal to the pre-configured CR threshold, the first terminal device is triggered to send the coordination request to the second terminal device. Therefore, when the channel occupancy ratio CR of the data packet to be sent is less than or equal to the pre-configured CR threshold, the first terminal device sends the coordination request to the second terminal device, and does not need to send coordination requests frequently, reducing signaling overhead .

Embodiments of the present disclosure provide another method for sending a coordination request, and FIG. 6 is a schematic flowchart of another method for sending a coordination request provided by the embodiments of the present disclosure. The method for sending the coordination request can be applied to a first terminal device. The method for sending the coordination request may be executed alone, or may be executed in combination with any embodiment in the present disclosure or a possible implementation manner in the embodiments, or may be executed in combination with any technical solution in related technologies.

As shown in Figure 6, the method for sending the coordination request may include the following steps.

In step 601, a trigger condition of the coordination request is determined.

In step 602, in response to the trigger condition being that a measured channel busy ratio CBR is less than or equal to a pre-configured CBR threshold, the first terminal device is triggered to send the coordination request to the second terminal device.

In the embodiments of the present disclosure, the first terminal device may preset the trigger condition that the measured channel busy ratio CBR is less than or equal to the pre-configured CBR threshold, the first terminal device performs resource selection for sending the data packet to be sent, and when the measured channel busy ratio CBR is less than or equal to the pre-configured CBR threshold, it triggers itself to send the coordination request to the second terminal device. The CBR is a ratio of a number of second subchannels within a specified slot range to a total number of subchannels in a resource pool, and the CBR threshold is pre-configured by an RRC message. A second subchannel is a subchannel with a corresponding received signal strength indicator RSSI greater than a configured RSSI threshold. For example, the CBR threshold is CBRₗᵢₘᵢₜ, and when CBR ≤ CBRₗᵢₘᵢₜ, the first terminal device sends the coordination request to the second terminal device. Similar to other embodiments of the present disclosure, there can be many ways of presetting, such as pre-storing in the first terminal device, or determining by the first terminal device according to a relevant communication protocol, or sending by a network side device or other devices to the first terminal device.

In a possible implementation of the embodiments of the present disclosure, before sending the data packets to be sent, the first terminal device measures a channel occupation of other UEs for sending the data packet in the sidelink by reusing a CBR measurement method in R16, that is, measuring a busyness of the channel of the other UEs in a current slot n. The CBR can be a ratio of a number of subchannels with the measured RSSI value higher than the configured RSSI threshold in a measurement window [n-c, n-1] to the total number of subchannels in the resource pool, where c is 100 or 100·2^{u} slots, where u refers to values corresponding to different subcarrier spacing sizes, and u=0, 1, 2, 3 (u=0 represents that the subcarrier is 15kHz, u=1 represents the subcarrier is 30kHz, u=2 represents the subcarrier is 60kHz, u=3 represents the subcarrier is 120kHz). When CBR ≤ CBRₗᵢₘᵢₜ is satisfied, it means that the channel is not busy, and the signaling transmission in the coordination process has little interference with sending data by other UEs. At this time, the UE-B can be triggered to send the coordination request to the UE-A.

In the embodiments of the present disclosure, step 601 may be implemented in any of the embodiments of the present disclosure, which is not limited in the embodiments of the present disclosure, and will not be repeated here.

In the method for sending the coordination request in the embodiments of the present disclosure, by determining the trigger condition of the coordination request, and in response to the trigger condition being that the measured channel busy ratio CBR is less than or equal to the pre-configured CBR threshold, the first terminal device is triggered to send the coordination request. Therefore, when the measured channel busy ratio CBR is less than or equal to the pre-configured CBR threshold, the first terminal device sends the coordination request to the second terminal device, and does not need to frequently send coordination requests, reducing signaling overhead.

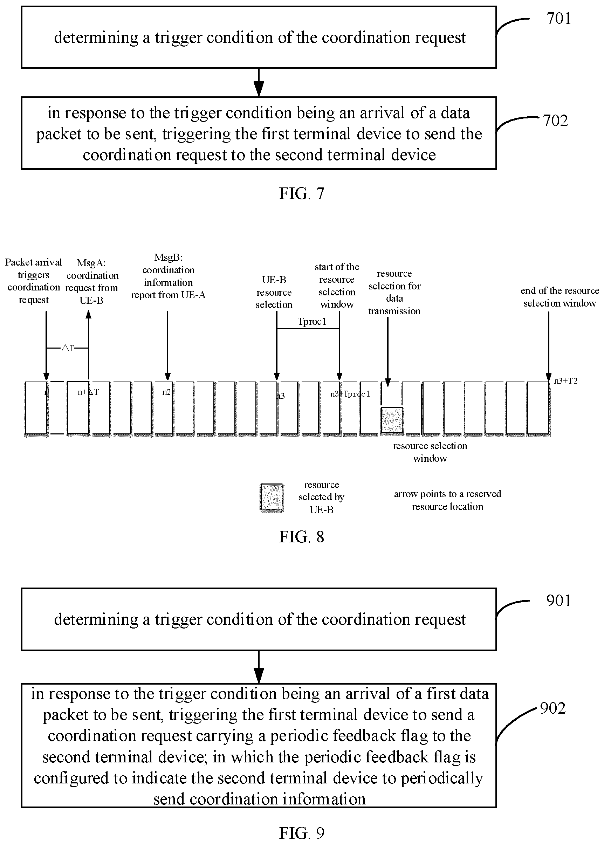

Embodiments of the present disclosure provide another method for sending a coordination request, and FIG. 7 is a schematic flowchart of another method for sending a coordination request provided by the embodiments of the present disclosure. The method for sending the coordination request can be applied to the first terminal device. The method for sending the coordination request may be executed alone, or may be executed in combination with any embodiment in the present disclosure or a possible implementation manner in the embodiments, or may be executed in combination with any technical solution in related technologies.

As shown in Figure 7, the method for sending the coordination request may include the following steps.

In step 701, a trigger condition of the coordination request is determined.

In step 702, in response to the trigger condition being an arrival of a data packet to be sent, the first terminal device is triggered to send the coordination request to a second terminal device.

In the embodiments of the present disclosure, the first terminal device may preset the trigger condition as the arrival of the data packet to be sent, and the first terminal device sends the coordination request to the second terminal device when the data packet to be sent arrives. For example, the data packet to be sent arrives at a slot n, and after time ΔT, the first terminal device sends the coordination request to the second terminal device. Similar to other embodiments of the present disclosure, there can be many ways of presetting, such as pre-storing in the first terminal device, or determining by the first terminal device according to a relevant communication protocol, or sending by a network side device or other devices to the first terminal device.

For example, as shown in Figure 8, when a data packet arrives at a slot n, after time ΔT, that is, at n+ΔT, the UE-B sends the coordination request MsgA to the UE-A; at a slot n2, the UE-A sends coordination information MsgB to the UE-B, the UE-B refers to the MsgB to determine a selected resource within a resource selection window [n3, n3+T2]. For example, the UE-B determines a resource location reserved for data transmission pointed by an arrow in a slot n3, and the UE-B performs physical layer processing on the data packet in a time window [n3, n3+Tproc1], so as to send the data packet at the resource location preselected in the resource selection window, where the Tproc1 is a parameter value, and Tproc1 can be {3, 5, 9, 17} slots, and corresponding subcarriers are f 15, 30, 60, 120} kHz.

In the embodiments of the present disclosure, step 701 may be implemented in any of the embodiments of the present disclosure, which is not limited in the embodiments of the present disclosure, and will not be repeated here.

In the method for sending the coordination request in the embodiments of the present disclosure, by determining the trigger condition of the coordination request, and in response to the trigger condition being the arrival of the data packet to be sent, the first terminal device is triggered to send the coordination request to the second terminal device. Therefore, the first terminal device sends the coordination request to the second terminal device when the arrival of the data packet to be sent is satisfied, and the coordination request does not need to be sent frequently, thereby reducing signaling overhead.

Embodiments of the present disclosure provide another method for sending a coordination request, and FIG. 9 is a schematic flowchart of another method for sending a coordination request provided by the embodiments of the present disclosure. The method for sending the coordination request can be applied to a first terminal device. The method for sending the coordination request may be executed alone, or may be executed in combination with any embodiment in the present disclosure or a possible implementation manner in the embodiments, or may be executed in combination with any technical solution in related technologies.

As shown in Figure 9, the method for sending the coordination request may include the following steps.

In step 901, a trigger condition of the coordination request is determined.

In step 902, in response to the trigger condition being an arrival of a first data packet to be sent, the first terminal device is triggered to send the coordination request carrying a periodic feedback flag to a second terminal device; in which the periodic feedback flag is configured to indicate the second terminal device to send periodically coordination information.

In the embodiments of the present disclosure, the first terminal device may preset the trigger condition as the arrival of the first data packet to be sent, and when the first data packet to be sent arrives, the first terminal device sends the coordination request carrying the periodic feedback flag. The periodic feedback flag may be configured to indicate the second terminal device to periodically send the coordination information. Similar to other embodiments of the present disclosure, there can be many ways of presetting, such as pre-storing in the first terminal device, or determining by the first terminal device according to a relevant communication protocol, or sending by a network side device or other devices to the first terminal device.

In a possible implementation of the embodiments of the present disclosure, when the first data packet of the UE-B arrives, after time T, the UE-B is triggered to send the coordination request carrying the periodic feedback flag to the UE-A, and the UE- A periodically sends the coordination information to the UE-B at a period T according to the period feedback flag.

In the embodiments of the present disclosure, step 901 may be implemented in any one of the embodiments of the present disclosure, which is not limited in the embodiment of the present disclosure, and will not be repeated here.

In the method for sending the coordination request in the embodiment of the present disclosure, by determining the trigger condition of the coordination request, and in response to the trigger condition being the arrival of the first data packet to be sent, the first terminal device is triggered to send the coordination request carrying the periodic feedback flag to the second terminal device, in which the periodic feedback flag is configured to indicate the second terminal device to periodically send the coordination information. Therefore, the first terminal device sends the coordination request carrying the periodic feedback flag to the second terminal device when the arrival of the first data packet to be sent is satisfied, and the coordination request does not need to be sent frequently, thereby reducing signaling overhead.

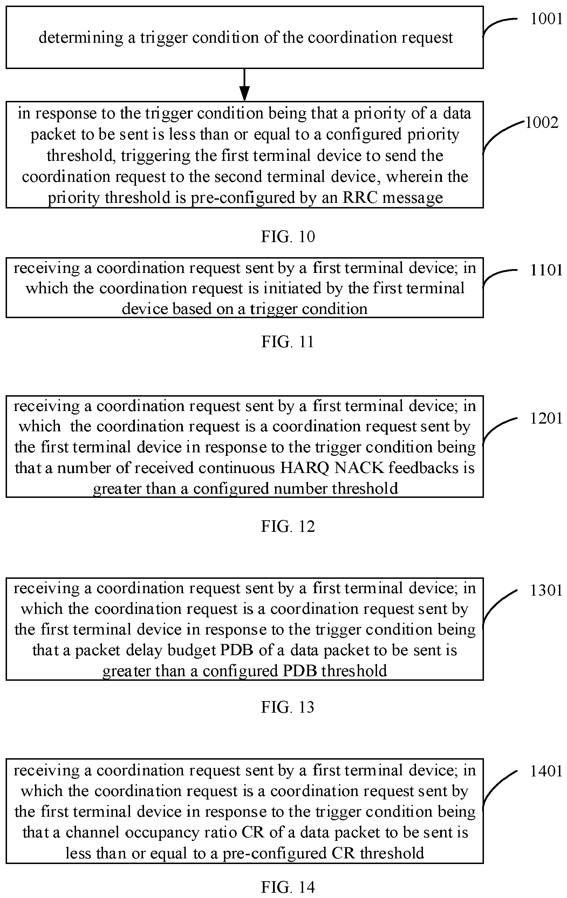

Embodiments of the present disclosure provide another method for sending a coordination request, and FIG. 10 is a schematic flowchart of another method for sending a coordination request provided by the embodiments of the present disclosure. The method for sending the coordination request can be applied to a first terminal device. The method for sending the coordination request may be executed alone, or may be executed in combination with any embodiment in the present disclosure or a possible implementation manner in the embodiments, or may be executed in combination with any technical solution in related technologies.

As shown in Figure 10, the method for sending the coordination request may include the following steps.

In step 1001, a trigger condition of the coordination request is determined.

In step 1002, in response to the trigger condition being that a priority of a data packet to be sent is less than or equal to a configured priority threshold, the first terminal device is triggered to send the coordination request to the second terminal device, in which the priority threshold is pre-configured by an RRC message.

In the embodiments of the present disclosure, the first terminal device may preset the trigger condition that the priority of the data packet to be sent is less than or equal to the configured priority threshold, and the first terminal device performs resource selection for sending the data packet to be sent, and when the priority of the data packet to be sent is less than or equal to the configured priority threshold, the coordination request is sent to the second terminal device. The priority threshold is pre-configured by the RRC message. Similar to other embodiments of the present disclosure, there can be many ways of presetting, such as pre-storing in the first terminal device, or determining by the first terminal device according to a relevant communication protocol, or sending by a network side device or other devices to the first terminal device.

For example, a value of the priority of the data packet to be sent is priorityᵥₐᵤₗₑ, the configured priority threshold is priority_{threshold}, and when priorityᵥₐᵤₗₑ ≤ priority_{threshold}, the first terminal device sends the coordination request to the second terminal device, where the priority_{threshold} may be pre-configured through the RRC message.

It should be noted that the smaller the priority value of the data packet, the higher the priority, the higher the reliability requirement, and the more the coordination information of the UE-A is needed, so the UE-B sends the coordination request to the UE-A, when the priority of the data packet to be sent is satisfied to be less than or equal to the configured priority threshold.

In the embodiments of the present disclosure, step 1001 may be implemented in any of the embodiments of the present disclosure, which is not limited in the embodiments of the present disclosure, and will not be repeated here.

In the method for sending the coordination request in the embodiments of the present disclosure, by determining the trigger condition of the coordination request, and in response to the trigger condition being that the priority of the data packet to be sent is less than or equal to the configured priority threshold, the first terminal device is triggered to send the coordination request to the second terminal. Therefore, when the priority of the data packet to be sent is less than or equal to the configured priority threshold, the first terminal device sends the coordination request to the second terminal device, and the coordination request does not need to be sent frequently, reducing signaling overhead.

Embodiments of the present disclosure provide a method for receiving a coordination request, and FIG. 11 is a schematic flowchart of the method for receiving the coordination request provided by the embodiments of the present disclosure.

The method for receiving the coordination request in the embodiments of the present disclosure is applied to a second terminal device.

As shown in Figure 11, the method for receiving the coordination request may include the following steps.

In step 1101, the coordination request sent by the first terminal device is received, in which the coordination request is initiated by the first terminal device based on a trigger condition.

In the embodiments of the present disclosure, the first terminal device may preset the trigger condition of the coordination request, in which the trigger condition of the coordination request may be used to trigger the first terminal device to send the coordination request, and the number of trigger conditions of the coordination request may be one or more. Similar to other embodiments of the present disclosure, there can be many ways of presetting, such as pre-storing in the first terminal device, or determining by the first terminal device according to a relevant communication protocol, or sending by a network side device or other devices to the first terminal device.

In a possible implementation of the embodiments of the present disclosure, when the first terminal device performs resource selection for sending a data packet, it is determined whether the trigger condition of the coordination request is satisfied, and when the trigger condition of the coordination request is satisfied, the first terminal device is triggered to send the coordination request to the second terminal device. After receiving the coordination request from the first terminal device, the second terminal device may send coordination information to the first terminal device, and the first terminal device may refer to the coordination information to perform resource selection.

It should be noted that the explanations of the method for sending the coordination request performed by the first terminal device in any of the above-mentioned embodiments in FIG. 1 to FIG. 10 are also applicable to the method for receiving the coordination request performed by the second terminal device in the embodiments. The implementation principle is similar, and will not be repeated here.

In the method for receiving the coordination request according to the embodiments of the present disclosure, the second terminal device receives the coordination request sent by the first terminal device, in which the coordination request is initiated by the first terminal device based on the trigger condition. Therefore, when the trigger condition of the coordination request is satisfied, the first terminal device sends the coordination request to the second terminal device, and the first terminal device does not need to send the coordination request frequently, reducing signaling overhead.

Embodiments of the present disclosure provide another method for receiving a coordination request, and FIG. 12 is a schematic flowchart of another method for receiving the coordination request provided by the embodiments of the present disclosure.

The method for receiving the coordination request in the embodiments of the present disclosure is applied to a second terminal device.

As shown in Figure 12, the method for receiving the coordination request may include the following steps.

In step 1201, the coordination request sent by a first terminal device is received, in which the coordination request is a coordination request sent by the first terminal device in response to the trigger condition being that a number of received continuous HARQ NACK feedbacks is greater than a configured number threshold.

In the embodiments of the present disclosure, step 1201 may be implemented in any one of the embodiments of the present disclosure, which is not limited in the embodiment of the present disclosure, and will not be repeated here.

In the method for receiving the coordination request in the embodiments of the present disclosure, the second terminal device receives the coordination request sent by the first terminal device, in which the coordination request is a coordination request sent by the first terminal device in response to the trigger condition being that the number of received continuous HARQ NACK feedbacks is greater than the configured number threshold. Therefore, when the number of consecutive HARQ NACK feedbacks received by the first terminal device is greater than the configured number threshold, the first terminal device sends the coordination request to the second terminal device, and the first terminal device does not need to send coordination requests frequently, which reduces signaling overhead.

Embodiments of the present disclosure provide another method for receiving a coordination request, and Fig. 13 is a schematic flowchart of another method for receiving a coordination request provided by the embodiments of the present disclosure.

The method for receiving the coordination request in the embodiments of the present disclosure is applied to a second terminal device.

As shown in Figure 13, the method for receiving the coordination request may include the following steps.

In step 1301, the coordination request sent by the first terminal device is received, in which the coordination request is a coordination request sent by the first terminal device in response to the trigger condition being that a packet delay budget PDB of a data packet to be sent is greater than a configured PDB threshold.

In the embodiments of the present disclosure, step 1301 may be implemented in any of the embodiments of the present disclosure, which is not limited in the embodiments of the present disclosure, and will not be repeated here.

In the method for receiving the coordination request according to the embodiments of the present disclosure, the second terminal device receives the coordination request sent by the first terminal device, in which the coordination request is a coordination request sent by the first terminal device in response to the trigger condition being that the packet delay budget PDB of the data packet to be sent is greater than the configured PDB threshold. Therefore, when the packet delay budget PDB of the data packet to be sent is satisfied to be greater than the configured PDB threshold, the first terminal device sends the coordination request to the second terminal device, and does not need to send coordination requests frequently, reducing signaling overhead.

Embodiments of the present disclosure provide another method for receiving a coordination request, and FIG. 14 is a schematic flowchart of another method for receiving the coordination request provided by the embodiments of the present disclosure.

The method for receiving the coordination request in the embodiments of the present disclosure is applied to a second terminal device.

As shown in Figure 14, the method for receiving the coordination request may include the following steps.

In step 1401, the coordination request sent by the first terminal device is received, in which the coordination request is a coordination request sent by the first terminal device in response to the trigger condition being that a channel occupancy ratio CR of a data packet to be sent is less than or equal to a pre-configured CR threshold.

Optionally, the CR is a ratio of a number of first subchannels within a specified slot range to a total number of subchannels belonging to a resource pool within the specified slot range. The first subchannels are a sum of a number of subchannels used to send the data packet within the specified slot range and reserved subchannels to be used to send the data packet. The CR threshold is a CR limit value corresponding to a configured priority k, and the CR threshold is pre-configured by an RRC message.

In the embodiments of the present disclosure, step 1401 may be implemented in any one of the embodiments of the present disclosure, which is not limited in the embodiments of the present disclosure, and will not be repeated here.

In the method for receiving the coordination request according to the embodiments of the present disclosure, the second terminal device receives the coordination request sent by the first terminal device, in which the coordination request is ab coordination request sent by the first terminal device in response to the trigger condition being that the channel occupancy ratio CR of the data packet to be sent is less than or equal to the pre-configured CR threshold. Therefore, when the channel occupancy ratio CR of the data packet to be sent is satisfied to be less than or equal to the pre-configured CR threshold, the first terminal device sends the coordination request to the second terminal device, and does not need to send coordination requests frequently, reducing signaling overhead.

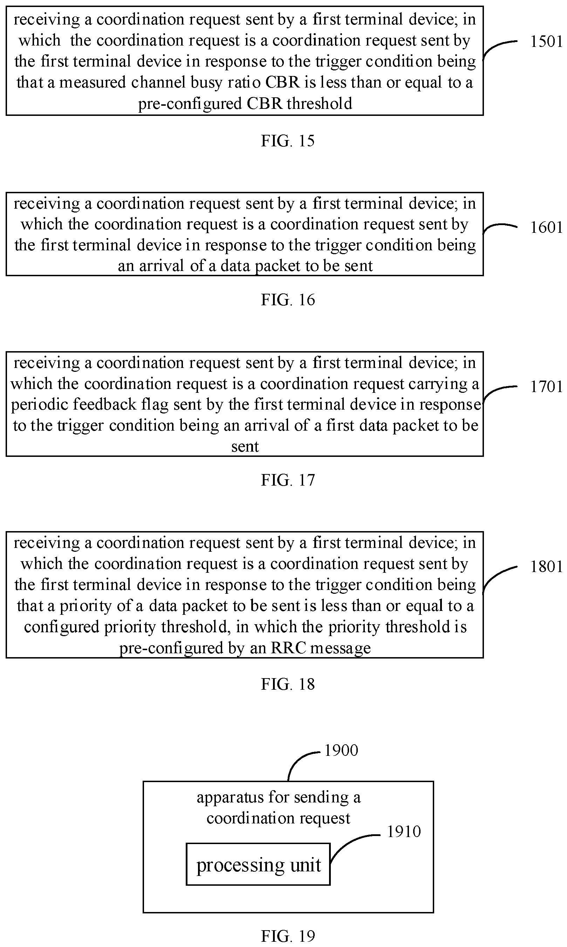

Embodiments of the present disclosure provide another method for receiving a coordination request, and FIG. 15 is a schematic flowchart of another method for receiving the coordination request provided by the embodiments of the present disclosure.

The method for receiving the coordination request in the embodiments of the present disclosure is applied to a second terminal device.

As shown in Figure 15, the method for receiving the coordination request may include the following steps.

In step 1501, the coordination request sent by a first terminal device is received, in which the coordination request is a coordination request sent by the first terminal device in response to the trigger condition being that a measured channel busy ratio CBR is less than or equal to a pre-configured CBR threshold.

Optionally, the CBR is a ratio of a number of second sub-channels within a specified slot range to a total number of sub-channels in a resource pool, and the CBR threshold is pre-configured by an RRC message. A second subchannel is a subchannel with a corresponding received signal strength indicator RSSI greater than a configured RSSI threshold.

In the embodiments of the present disclosure, step 1501 may be implemented in any of the embodiments of the present disclosure, which is not limited in the embodiments of the present disclosure, and will not be repeated here.

In the method for receiving the coordination request in the embodiments of the present disclosure, the second terminal device receives the coordination request sent by the first terminal device, in which the coordination request is a coordination request sent by the first terminal device in response to the trigger condition being that the measured channel busy ratio CBR is less than or equal to the pre-configured CBR threshold. Therefore, when the measured channel busy ratio CBR is less than or equal to the pre-configured CBR threshold, the first terminal device sends the coordination request to the second terminal device, and the first terminal device does not need to send coordination requests frequently, which reduces signaling overhead.

Embodiments of the present disclosure provide another method for receiving a coordination request, and FIG. 16 is a schematic flowchart of another method for receiving the coordination request provided by the embodiments of the present disclosure.

The method for receiving the coordination request in the embodiments of the present disclosure is applied to a second terminal device.

As shown in Figure 16, the method for receiving the coordination request may include the following steps.

In step 1601, the coordination request sent by a first terminal device is received, in which the coordination request is a coordination request sent by the first terminal device in response to the trigger condition being an arrival of a data packet to be sent.

In the embodiments of the present disclosure, step 1601 may be implemented in any one of the embodiments of the present disclosure, which is not limited in the embodiments of the present disclosure, and will not be repeated here.

In the method for receiving the coordination request according to the embodiments of the present disclosure, the second terminal device receives the coordination request sent by the first terminal device, in which the coordination request is a coordination request sent by the first terminal device in response to the trigger condition being the arrival of the data packet to be sent. Therefore, when the arrival of the data packet to be sent is satisfied, the first terminal device sends the coordination request to the second terminal device, and the first terminal device does not need to frequently send the coordination request, which reduces signaling overhead.

Embodiments of the present disclosure provide another method for receiving a coordination request, and FIG. 17 is a schematic flowchart of another method for receiving the coordination request provided by the embodiments of the present disclosure.

The method for receiving the coordination request in the embodiments of the present disclosure is applied to a second terminal device.

As shown in Figure 17, the method for receiving the coordination request may include the following steps.

In step 1701, a coordination request sent by the first terminal device is received, in which the coordination request is a coordination request carrying a periodic feedback flag sent by the first terminal device in response to the trigger condition being an arrival of a first data packet to be sent.

In the embodiments of the present disclosure, step 1701 may be implemented in any of the embodiments of the present disclosure, which is not limited in the embodiments of the present disclosure, and will not be repeated here.

In the method for receiving the coordination request in the embodiments of the present disclosure, the second terminal device receives the coordination request sent by the first terminal device, in which the coordination request is a coordination request carrying the periodic feedback flag sent by the first terminal device in response to the trigger condition being the arrival of the first data packet to be sent. Therefore, when the arrival of the first data packet to be sent is satisfied, the first terminal device sends the coordination request carrying the periodic feedback flag to the second terminal device, and the first terminal device does not need to send coordination requests frequently, which reduces signaling overhead.

Embodiments of the present disclosure provide another method for receiving a coordination request, and FIG. 18 is a schematic flowchart of another method for receiving the coordination request provided by the embodiments of the present disclosure.

The method for receiving the coordination request in the embodiments of the present disclosure is applied to a second terminal device.

As shown in Figure 18, the method for receiving the coordination request may include the following steps.

In step 1801, the coordination request sent by a first terminal device is received, in which the coordination request is a coordination request sent by the first terminal device in response to the trigger condition being that a priority of a data packet to be sent is less than or equal to a configured priority threshold, in which the priority threshold is pre-configured by an RRC message.

In the embodiments of the present disclosure, step 1801 may be implemented in any one of the embodiments of the present disclosure, which is not limited in the embodiments of the present disclosure, and will not be repeated here.

In the method for receiving the coordination request in the embodiments of the present disclosure, the second terminal device receives the coordination request sent by the first terminal device, in which the coordination request is a coordination request sent by the first terminal device in response to the trigger condition being that the priority of the data packet to be sent is less than or equal to the configured priority threshold. Therefore, when the priority of the data packet to be sent is satisfied to be less than or equal to the configured priority threshold, the first terminal device sends the coordination request carrying the periodic feedback flag to the second terminal device, and the first terminal device does not need to frequently send coordination requests, which reduces signaling overhead.

Corresponding to the method for sending a coordination request provided in the above embodiments of FIGS. 1 to 10, the present disclosure also provides an apparatus for sending a coordination request. The apparatus for sending a coordination request provided in the embodiments of the present disclosure is corresponding to the method for sending the coordination request provided in the above embodiments of FIGS. 1 to 10, so the implementation of the method for sending the coordination request is also applicable to the apparatus for sending the coordination request provided in the embodiments of the present disclosure, and will not be described in detail in the embodiments of the present disclosure.

Fig. 19 is a schematic structural diagram of an apparatus for sending a coordination request provided by embodiments of the present disclosure. The apparatus is applied to a first terminal device.

As shown in FIG. 19, the apparatus 1900 for sending a coordination request may include: a processing unit 1910.

The processing unit 1910 is configured to determine a trigger condition of a coordination request; and the processing unit 1910 is further configured to trigger the first terminal device to send the coordination request to a second terminal device according to the trigger condition of the coordination request.

Optionally, the processing unit 1910 is specifically configured to, in response to the trigger condition being that a packet delay budget PDB of a data packet to be sent is greater than a configured PDB threshold, trigger the first terminal device to send the coordination request to the second terminal device.

Optionally, the processing unit 1910 is specifically configured to, in response to the trigger condition being that a channel occupancy ratio CR of a data packet to be sent is less than or equal to a pre-configured CR threshold, trigger the first terminal device to send the coordination request to the second terminal device.

Optionally, the processing unit 1910 is specifically configured to trigger the first terminal device to send a coordination request to the second terminal device in response to a trigger condition that the channel occupancy ratio CR of the data packet to be sent is less than or equal to a pre-configured CR threshold.

Optionally, the CR is a ratio of a number of first subchannels within a specified slot range to a total number of subchannels belonging to a resource pool within the specified slot range. The first subchannels are a sum of a number of subchannels used to send the data packet within the specified slot range and reserved subchannels to be used to send the data packet. The CR threshold is a CR limit value corresponding to a configured priority k, and the CR threshold is pre-configured by an RRC message.

Optionally, the processing unit 1910 is specifically configured to, in response to the trigger condition being that a measured channel busy ratio CBR is less than or equal to a pre-configured CBR threshold, trigger the first terminal device to send the coordination request to the second terminal device.

Optionally, the CBR is a ratio of a number of second subchannels within a specified slot range to a total number of subchannels in a resource pool, and the CBR threshold is pre-configured by an RRC message. A second subchannel is a subchannel with a corresponding received signal strength indicator RSSI greater than a configured RSSI threshold.

Optionally, the processing unit 1910 is specifically configured to, in response to the trigger condition being an arrival of a data packet to be sent, trigger the first terminal device to send the coordination request to the second terminal device.

Optionally, the processing unit 1910 is specifically configured to, in response to the trigger condition being an arrival of a first data packet to be sent, trigger the first terminal device to send a coordination request carrying a periodic feedback flag to the second terminal device. The periodic feedback flag is configured to indicate the second terminal device to periodically send coordination information.

Optionally, the processing unit 1910 is specifically configured to, in response to the trigger condition being that a priority of a data packet to be sent is less than or equal to a configured priority threshold, trigger the first terminal device to send the coordination request to the second terminal device, in which the priority threshold is pre-configured by an RRC message.

In the apparatus for sending the coordination request according to the embodiments of the present disclosure, after the first terminal device determines the trigger condition of the coordination request, the first terminal device is triggered to send the coordination request to the second terminal device according to the trigger condition of the coordination request. Therefore, when the trigger condition of the coordination request is satisfied, the first terminal device sends the coordination request to the second terminal device, and the coordination request does not need to be sent frequently, thereby reducing signaling overhead.

Corresponding to the method for receiving a coordination request provided in the above embodiments of FIGS. 11 to 18, the present disclosure also provides an apparatus for receiving a coordination request. The apparatus for receiving a coordination request provided in the embodiments of the present disclosure is corresponding to the method for receiving the coordination request provided in the above embodiments of FIGS. 11 to 18, so the implementation of the method for receiving the coordination request is also applicable to the apparatus for receiving the coordination request provided in the embodiments of the present disclosure, and will not be described in detail in the embodiments of the present disclosure..

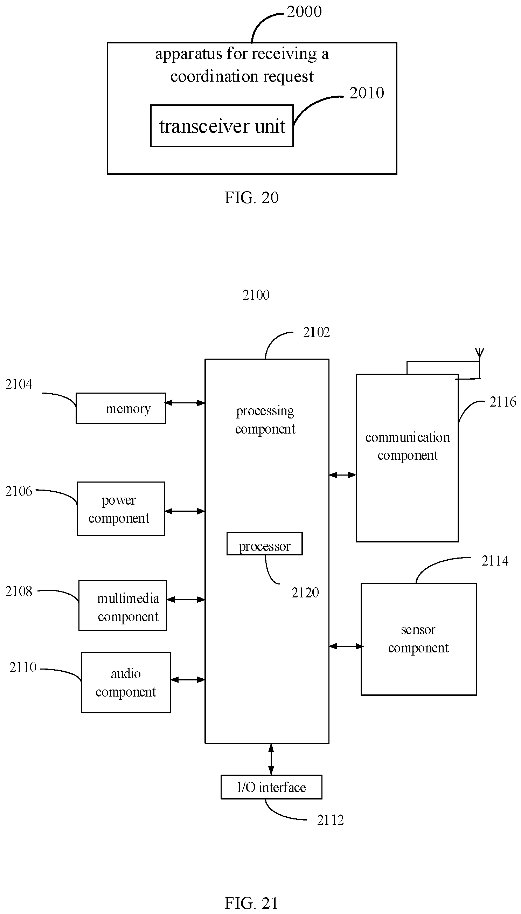

Fig. 20 is a schematic structural diagram of an apparatus for receiving a coordination request provided by embodiments of the present disclosure. The apparatus is applied to the second terminal device.

As shown in FIG. 20, the apparatus 2000 for receiving the coordination request may include: a transceiver unit 2010.

The transceiver unit 2010 is configured to receive a coordination request sent by the first terminal device. The coordination request is initiated by the first terminal device based on a trigger condition.

Optionally, the coordination request is a coordination request sent by the first terminal device in response to the trigger condition being that a number of received continuous HARQ NACK feedbacks is greater than a configured number threshold.

Optionally, the coordination request is a coordination request sent by the first terminal device in response to the trigger condition being that a packet delay budget PDB of a data packet to be sent is greater than a configured PDB threshold.

Optionally, the coordination request is a coordination request sent by the first terminal device in response to the trigger condition being that a channel occupancy ratio CR of a data packet to be sent is less than or equal to a pre-configured CR threshold.

Optionally, the CR is a ratio of a number of first subchannels within a specified slot range to a total number of subchannels belonging to a resource pool within the specified slot range. The first subchannels are a sum of a number of subchannels used to send the data packet within the specified slot range and reserved subchannels to be used to send the data packet. The CR threshold is a CR limit value corresponding to a configured priority k, and the CR threshold is pre-configured by an RRC message.

Optionally, the coordination request is a coordination request sent by the first terminal device in response to the trigger condition being that a measured channel busy ratio CBR is less than or equal to a pre-configured CBR threshold.

Optionally, the CBR is a ratio of a number of second sub-channels within a specified slot range to a total number of sub-channels in a resource pool, and the CBR threshold is pre-configured by an RRC message. A second subchannel is a subchannel with a corresponding received signal strength indicator RSSI greater than a configured RSSI threshold.

Optionally, the coordination request is a coordination request sent by the first terminal device in response to the trigger condition being an arrival of a data packet to be sent.

Optionally, the coordination request is a coordination request carrying a periodic feedback flag sent by the first terminal device in response to the trigger condition being an arrival of a first data packet to be sent. The periodic feedback flag is configured to indicate the second terminal device to periodically send coordination information.

Optionally, the coordination request is a coordination request sent by the first terminal device in response to the trigger condition being that a priority of a data packet to be sent is less than or equal to a configured priority threshold, in which the priority threshold is pre-configured by an RRC message.

In the apparatus for receiving the coordination request in the embodiments of the present disclosure, the second terminal device receives the coordination request sent by the first terminal device, in which the coordination request is initiated by the first terminal device based on a trigger condition. Therefore, when the trigger condition of the coordination request is satisfied, the first terminal device sends the coordination request to the second terminal device, and the first terminal device does not need to send the coordination request frequently, which reduces signaling overhead.

In order to achieve the above embodiments, the present disclosure also provides an apparatus for sending a coordination request. The apparatus includes a processor and an interface circuit. The interface circuit is configured to receive code instructions and transmit them to the processor. The processor is configured to run code instructions to perform the method described in the embodiments of FIG. 1 to FIG. 10 of the present disclosure.

In order to achieve the above embodiments, the present disclosure also proposes an apparatus for receiving a coordination request. The apparatus includes a processor and an interface circuit. The interface circuit is configured to receive code instructions and transmit them to the processor. The processor is configured to run code instructions to perform the method described in the embodiments of FIG. 11 to FIG. 18 of the present disclosure.

In order to implement the above-mentioned embodiments, the present disclosure further proposes a computer-readable storage medium configured to store instructions. When the instructions are executed, the method described in the embodiments of FIG. 1 to FIG. 10 of the present disclosure is implemented.

In order to implement the above-mentioned embodiments, the present disclosure further proposes a computer-readable storage medium configured to store instructions. When the instructions are executed, the method described in the embodiments of FIG. 11 to FIG. 18 of the present disclosure is implemented.

In order to implement the above-mentioned embodiments, the present disclosure further proposes a computer program product, which, when running on a computer, causes the computer to execute the method described in the embodiments of FIG. 1 to FIG. 10 of the present disclosure.

In order to implement the above-mentioned embodiments, the present disclosure further proposes a computer program product, which, when running on a computer, causes the computer to execute the method described in the embodiments of FIG. 11 to FIG. 18 of the present disclosure.

FIG. 21 is a block diagram of a UE 2100 provided by embodiments of the present disclosure. For example, the UE 2100 may be a mobile phone, computer, digital broadcast terminal, messaging device, game console, tablet device, medical device, fitness device, personal digital assistant, and the like.

Referring to FIG. 21, the UE 2100 may include at least one of the following components: a processing component 2102, a memory 2104, a power component 2106, a multimedia component 2108, an audio component 2110, an input/output (I/O) interface 2112, a sensor component 2114, and a communication component 2116.

The processing component 2102 typically controls overall operations of the UE 2100, such as the operations associated with display, telephone calls, data communications, camera operations, and recording operations. The processing component 2102 may include at least one processor 2120 to execute instructions to perform all or part of the steps in the above described method. Moreover, the processing component 2102 may include at least one module which facilitates the interaction between the processing component 2102 and other components. For example, the processing component 2102 may include a multimedia module to facilitate the interaction between the multimedia component 2108 and the processing component 2102.

The memory 2104 is configured to store various types of data to support the operation of the UE 2100. Examples of such data include instructions for any applications or methods operated on the UE 2100, contact data, phonebook data, messages, pictures, video, etc. The memory 2104 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a programmable read-only memory (PROM), a Read-Only Memory (ROM), a magnetic memory, a flash memory, a magnetic or optical disk.

The power component 2106 provides power to various components of the UE 2100. The power component 2106 may include a power management system, at least one power source, and any other components associated with the generation, management, and distribution of power in the UE 2100.

The multimedia component 2108 includes a screen providing an output interface between the UE 2100 and the user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 2108 includes a front-facing camera and/or a rear-facing camera. When the UE 2100 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 2110 is configured to output and/or input audio signals. For example, the audio component 2110 includes a microphone (MIC) configured to receive an external audio signal when the UE 2100 is in an operation mode, such as a call mode, a recording mode, and a voice recognition mode. The received audio signal may be further stored in the memory 2104 or transmitted via the communication component 2116. In some embodiments, the audio component 2110 further includes a speaker to output audio signals.

The I/O interface 2112 provides an interface between the processing component 2102 and peripheral interface modules, such as a keyboard, a click wheel, buttons, and the like. The buttons may include, but are not limited to, a home button, a volume button, a starting button, and a locking button.

The sensor component 2114 includes one or more sensors to provide status assessments of various aspects of the UE 2100. For instance, the sensor component 2114 may detect an open/closed status of the UE 2100, relative positioning of components, e.g., the display and the keypad of the UE 2100, a change in position of the UE 2100 or a component of the UE 2100, a presence or absence of user contact with the UE 2100, an orientation or an acceleration/deceleration of the UE 2100, and a change in temperature of the UE 2100. The sensor component 2114 may include a proximity sensor configured to detect the presence of nearby objects without any physical contact. The sensor component 2114 may also include a light sensor, such as a CMOS or CCD image sensor, for use in imaging applications. In some embodiments, the sensor component 2114 may also include an accelerometer sensor, a gyroscope sensor, a magnetic sensor, a pressure sensor, or a temperature sensor.

The communication component 2116 is configured to facilitate communication, wired or wirelessly, between the UE 2100 and other devices. The UE 2100 can access a wireless network based on a communication standard, such as WiFi, 2G, 3G, or a combination thereof. In an exemplary embodiment, the communication component 2116 receives a broadcast signal or broadcast associated information from an external broadcast management system via a broadcast channel. In an embodiment, the communication component 2116 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In exemplary embodiments, the UE 2100 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method of any embodiment.

In exemplary embodiments, there is also provided a non-transitory computer readable storage medium including instructions, such as included in the memory 2104, executable by the processor 2120 in the UE 2100, for performing the above described methods. For example, the non-transitory computer-readable storage medium may be a ROM, a RAM, a CD-ROM, a magnetic tape, a floppy disc, an optical data storage device, and the like.

Those skilled in the art may clearly understand that, specific working processes of systems, apparatuses and units described above may refer to corresponding processes in the above method embodiments, which will not be repeated here.

Other implementations of the invention will be readily apparent to those skilled in the art from consideration of the specification and practice of the invention disclosed herein. The present disclosure is intended to cover any modification, use or adaptation of the invention, these modifications, uses or adaptations follow the general principle of the invention and include common knowledge or conventional technical means in the technical field not disclosed in the present disclosure. The specification and embodiments are to be considered exemplary only, with a true scope and spirit of the disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A method for sending a coordination request, applied to a first terminal device, comprising:
determining a trigger condition of the coordination request; and
triggering the first terminal device to send the coordination request to a second terminal device according to the trigger condition of the coordination request.

2. The method according to claim 1, wherein triggering the first terminal device to send the coordination request to the second terminal device comprises:
in response to the trigger condition being that a number of received continuous HARQ NACK feedbacks is greater than a configured number threshold, triggering the first terminal device to send the coordination request to the second terminal device.

3. The method according to claim 1, wherein triggering the first terminal device to send the coordination request to the second terminal device comprises:
in response to the trigger condition being that a packet delay budget PDB of a data packet to be sent is greater than a configured PDB threshold, triggering the first terminal device to send the coordination request to the second terminal device.

4. The method according to claim 1, wherein triggering the first terminal device to send the coordination request to the second terminal device comprises:
in response to the trigger condition being that a channel occupancy ratio CR of a data packet to be sent is less than or equal to a pre-configured CR threshold, triggering the first terminal device to send the coordination request to the second terminal device.

5. The method according to claim 4, wherein the CR is a ratio of a number of first subchannels within a specified slot range to a total number of subchannels belonging to a resource pool within the specified slot range;
wherein the first subchannels are a sum of a number of subchannels used to send the data packet within the specified slot range and reserved subchannels to be used to send the data packet;
the CR threshold is a CR limit value corresponding to a configured priority k, and the CR threshold is pre-configured by an RRC message.

6. The method according to claim 1, wherein triggering the first terminal device to send the coordination request to the second terminal device comprises:
in response to the trigger condition being that a measured channel busy ratio CBR is less than or equal to a pre-configured CBR threshold, triggering the first terminal device to send the coordination request to the second terminal device.

7. The method according to claim 6, wherein the CBR is a ratio of a number of second subchannels within a specified slot range to a total number of subchannels in a resource pool, and the CBR threshold is pre-configured by an RRC message;
wherein a second subchannel is a subchannel with a corresponding received signal strength indicator RSSI greater than a configured RSSI threshold.

8. The method according to claim 1, wherein triggering the first terminal device to send the coordination request to the second terminal device comprises:
in response to the trigger condition being an arrival of a data packet to be sent, triggering the first terminal device to send the coordination request to the second terminal device.

9. The method according to claim 1, wherein triggering the first terminal device to send the coordination request to the second terminal device comprises:
in response to the trigger condition being an arrival of a first data packet to be sent, triggering the first terminal device to send a coordination request carrying a periodic feedback flag to the second terminal device;
wherein the periodic feedback flag is configured to indicate the second terminal device to periodically send coordination information.

10. The method according to claim 1, wherein triggering the first terminal device to send the coordination request to the second terminal device comprises:
in response to the trigger condition being that a priority of a data packet to be sent is less than or equal to a configured priority threshold, triggering the first terminal device to send the coordination request to the second terminal device, wherein the priority threshold is pre-configured by an RRC message.

11. A method for receiving a coordination request, applied to a second terminal device, comprising:
receiving a coordination request sent by a first terminal device;
wherein the coordination request is initiated by the first terminal device based on a trigger condition.

12. The method according to claim 11, wherein the coordination request is a coordination request sent by the first terminal device in response to the trigger condition being that a number of received continuous HARQ NACK feedbacks is greater than a configured number threshold.

13. The method according to claim 11, wherein the coordination request is a coordination request sent by the first terminal device in response to the trigger condition being that a packet delay budget PDB of a data packet to be sent is greater than a configured PDB threshold.

14. The method according to claim 11, wherein the coordination request is a coordination request sent by the first terminal device in response to the trigger condition being that a channel occupancy ratio CR of a data packet to be sent is less than or equal to a pre-configured CR threshold.

15. The method according to claim 14, wherein the CR is a ratio of a number of first subchannels within a specified slot range to a total number of subchannels belonging to a resource pool within the specified slot range;
wherein the first subchannels are a sum of a number of subchannels used to send the data packet within the specified slot range and reserved subchannels to be used to send the data packet;
the CR threshold is a CR limit value corresponding to a configured priority k, and the CR threshold is pre-configured by an RRC message.

16. The method according to claim 11, wherein the coordination request is a coordination request sent by the first terminal device in response to the trigger condition being that a measured channel busy ratio CBR is less than or equal to a pre-configured CBR threshold.

17. The method according to claim 16, wherein the CBR is a ratio of a number of second sub-channels within a specified slot range to a total number of sub-channels in a resource pool, and the CBR threshold is pre-configured by an RRC message;
wherein a second subchannel is a subchannel with a corresponding received signal strength indicator RSSI greater than a configured RSSI threshold.

18. The method according to claim 11, wherein the coordination request is a coordination request sent by the first terminal device in response to the trigger condition being an arrival of a data packet to be sent.

19. The method according to claim 11, wherein the coordination request is a coordination request carrying a periodic feedback flag sent by the first terminal device in response to the trigger condition being an arrival of a first data packet to be sent;
wherein the periodic feedback flag is configured to indicate the second terminal device to periodically send coordination information.

20. The method according to claim 11, wherein the coordination request is a coordination request sent by the first terminal device in response to the trigger condition being that a priority of a data packet to be sent is less than or equal to a configured priority threshold, wherein the priority threshold is pre-configured by an RRC message.

21. An apparatus for sending a coordination request, comprising a processor and a memory, wherein the memory is stored with a computer program, and the processor executes the computer program stored in the memory, to cause the apparatus to perform the method of any one of claims 1 to 10.

22. An apparatus for receiving a coordination request, comprising a processor and a memory, wherein the memory is stored with a computer program, and the processor executes the computer program stored in the memory, to cause the apparatus to perform the method of any one of claims 11 to 20.

23. An apparatus for sending a coordination request, comprising a processor and an interface circuit;
wherein the interface circuit is configured to receive code instructions and transmit the code instructions to the processor; and
the processor is configured to run the code instructions to perform the method of any one of claims 1 to 10.

24. An apparatus for receiving a coordination request, comprising a processor and an interface circuit;
wherein the interface circuit is configured to receive code instructions and transmit the code instructions to the processor; and
the processor is configured to run the code instructions to perform the method of any one of claims 11 to 20.

25. A computer-readable storage medium configured to store instructions, wherein when the instructions are executed, the method according to any one of claims 1 to 10 is caused to be implemented.

26. A computer-readable storage medium configured to store instructions, wherein when the instructions are executed, the method according to any one of claims 11 to 20 is caused to be implemented.
